# FASCICULE DE BREVET EUROPEEN

(11) **EP 1 063 151 B1**
(45) Date de publication et mention de la délivrance du brevet: **18.01.2006**
(21) Numéro de dépôt: 00401765.3
(22) Date de dépôt: 21.06.2000
(51) Int. Cl.: B62D 25/14, B60K 37/00

(54) **Planche de bord**
Cockpit
Cockpit

(30) Priorité: 23.06.1999 FR 9908038
(43) Date de publication de la demande: 27.12.2000
(73) Titulaire: SAI AUTOMOTIVE ALLIBERT INDUSTRIE, 92748 Nanterre (FR)
(72) Inventeur: Rahmstorf, Peter, 38380 Saint-Laurent-du-Pont (FR); Creutz, Lydia, 67340 Ingwiller (FR)
(74) Mandataire: Lerner, François

(56) Documents cités:
- FR-A- 2 623 776
- US-A- 4 355 820
- US-A- 5 238 286
- US-A- 5 556 153
- US-A- 5 709 601
- US-A- 5 856 908
- PATENT ABSTRACTS OF JAPAN vol. 1999, no. 11, 30 septembre 1999 (1999-09-30) -& JP 11 165524 A (MORIROKU COMPANY LTD), 22 juin 1999 (1999-06-22)
- PATENT ABSTRACTS OF JAPAN vol. 011, no. 086 (M-572), 17 mars 1987 (1987-03-17) -& JP 61 241263 A (NISSAN MOTOR CO LTD), 27 octobre 1986 (1986-10-27)

## Description

L'invention concerne un cockpit de planche de bord d'un véhicule automobile comprenant une structure incluant des piliers "A".

US-A-5 556 153 décrit un cockpit présentant une direction principale d'allongement ayant une longueur, cette direction principale intersectant deux côtés latéraux du cockpit destinés à être positionnés à proximité desdits piliers "A" du véhicule, le cockpit étant adapté pour résister, dans des conditions déterminées, à un effort maximum, le cockpit comprenant :
- des moyens de fixation, pour fixer le cockpit à la structure du véhicule et transmettre, de l'un à l'autre, une partie au moins dudit effort,
- des moyens de renfort transversal s'étendant globalement suivant ladite direction d'allongement, lesdits moyens de renfort transversal comprennent une unique poutre creuse qui s'étend globalement suivant la direction d'allongement sur l'essentiel au moins de ladite longueur, et qui définit un conduit de circulation d'air en étant, de ce fait, reliée à des ouvertures d'entrée d'air et de sortie d'air vers le véhicule, cette poutre présentant en outre une résistance mécanique lui permettant de résister sensiblement à l'intégralité de l'effort maximum auquel le cockpit doit pouvoir résister.

Une partie essentielle du cockpit va assurer une fonction non seulement de résistance structurelle, mais également une fonction de "distribution" d'air optimisée permettant de diminuer sensiblement les longueurs de canalisations et donc les pertes de charge induites, en comparaison des solutions traditionnelles.

Typiquement, dans un véhicule automobile, les vibrations et leur transmission sont un problème important.

L'invention propose d'y apporter une solution en conseillant que le cockpit comprenne une structure antivibrations liée à la poutre et comprenant une potence ou un portique auquel (à laquelle) est relié l'un parmi une colonne de direction et un levier de changement de vitesse, pour absorber les vibrations pouvant être transmises dans (ou vers) la colonne ou le levier, la structure antivibrations comprenant au moins deux zones de fixation éloignées l'une de l'autre pour deux telles liaisons avec la structure du véhicule.

Concernant cette "structure antivibrations", l'invention s'est attachée à la définir avantageusement de manière qu'elle s'intègre aisément à des cockpits destinés à des véhicules différents, tout en satisfaisant aux exigences imposées par ces différents véhicules et en respectant les contraintes de fiabilité et de coûts imposées dans le domaine, avec une efficacité maîtrisée quant à la fonction que cette structure doit assurer.

Aussi, une caractéristique complémentaire de l'invention conseille-t-elle que la structure antivibrations comprenne :
- l'une parmi une plaque ou une barre, s'étendant globalement suivant la direction générale d'allongement du cockpit, dans une zone inférieure de ce cockpit, et à laquelle est lié(e) la colonne ou le levier, pour la transmission des vibrations,
- et au moins un pied dressé sous la plaque ou la barre, ce(s) pied(s) étant relié(s) à des moyens de liaison pour le(s) relier au plancher du véhicule, afin de transmettre lesdites vibrations vers ce plancher.

Pour les considérations précitées, et dans le but d'optimiser le rapport efficacité/coût de cette structure antivibrations, une autre caractéristique de l'invention conseille que ladite structure s'étende, depuis le côté latéral du cockpit le plus proche de la colonne de direction, jusqu'au-delà de la zone d'emplacement de cette colonne, mais sur une partie seulement de la longueur du cockpit.

Typiquement, dans un véhicule, l'unité de chauffage et/ ou de ventilation (qui peut d'ailleurs intégrer une fonction climatisation) constitue un bloc assez volumineux qui est solidement fixé à la structure du véhicule.

Dans l'invention, on propose de tirer parti de cette unité dans le cadre de la liaison entre le cockpit et la structure du véhicule.

Aussi, est-il proposé que le cockpit soit lié, par l'intermédiaire de la structure antivibrations, à cette unité de chauffage et de ventilation que l'on disposera alors sous la structure antivibrations et qui sera alors adaptée pour générer de l'air à température régulée vers les moyens d'entrée d'air reliés au conduit de circulation d'air précité du cockpit.

En relation avec les conditions de liaison cockpit/unité de chauffage et de ventilation, une caractéristique complémentaire de l'invention conseille que le cockpit comprenne en outre des glissières pour la liaison entre le cockpit et l'unité de chauffage et de ventilation.

Dans ces conditions, le positionnement entre les deux pièces pourra être plus aisé, ainsi que leur remontage relatif.

En outre, l'invention a pour objet de définir une synergie pouvant exister entre certaines parties d'un tel cockpit, en évitant de multiplier les pièces et en configurant au contraire ces pièces comme des pièces multifonctionnelles, favorisant ainsi une standardisation des cockpits tout en offrant la possibilité d'optimiser certaines au moins des fonctions de ces pièces.

Pour ce faire, l'invention conseille que la poutre qui définit le conduit d'air, et les ouvertures d'entrée et de sortie d'air, soient intégrées à une pièce structurelle moulée, constituée essentiellement de matière plastique, globalement en forme de plaque et portant certains au moins des moyens de fixation, cette pièce structurelle étant recouverte par une coiffe d'habillage qui est fixée à elle et qui est moins résistante mécaniquement que la pièce structurelle.

Pour satisfaire aux problèmes, pas toujours compatibles, de coûts, fabrication en série, facilité de fabrication, fiabilité, et adaptabilité à des types de véhicules différents ("monospace", berline, coupé, ...) ayant des styles et donc des conformations de planche de bord différents, l'invention conseille que le cockpit comprenne :
- un premier plateau s'étendant globalement dans un plan horizontal et présentant une longueur suivant ladite direction d'allongement, le premier plateau intégrant une première partie supérieure de canal, ouvert vers le bas et s'étendant globalement suivant cette direction,
- un second plateau s'étendant globalement dans un plan horizontal et présentant une longueur suivant la direction d'allongement, le second plateau intégrant une seconde partie inférieure de canal, ouverte vers le haut, et s'étendant globalement suivant cette direction,
- les premier et second plateaux étant liés ensemble pour définir ledit conduit de circulation d'air.

Un mode favorable de réalisation permettant une bonne complémentarité entre la structure en double plateau et la "structure antivibrations" et respectant les objectifs de fabrication et de fiabilité est, de préférence, tel que la structure antivibrations comprenne une plaque s'étendant globalement dans un plan horizontal et présentant une longueur suivant la direction générale d'allongement du cockpit, cette plaque étant disposée sous la pièce structurelle et fixée à elle, ainsi qu'à une jambe de force dressée sensiblement verticalement et liée à ladite pièce structurelle, à l'écart des côtés latéraux du cockpit.

Outre ce qui précède, un objet de l'invention concerne un véhicule automobile. Afin de réduire les vibrations et leur transmission, conformément à l'invention, le véhicule présente les caractéristiques mentionnées à la revendication 9.

On notera que c'est le cockpit dans son ensemble qui doit pouvoir supporter "l'effort maximum" appliqué, même si l'invention conseille que la poutre transversale puisse, en elle-même (donc seule), supporter l'intégralité de cet effort.

A cette étape de la description, on notera également que l'expression "suivant la direction principale d'allongement" signifie le long de cette direction, ou parallèlement à elle.

Une description encore plus détaillée de l'invention va maintenant être fournie en référence aux dessins annexés dans lesquels :
- la figure 1 montre un éclaté d'une première partie des éléments constitutifs du cockpit de l'invention,
- la figure 2 montre toujours en éclaté la liaison entre une colonne de direction et la barre transversale de renforcement à laquelle elle est liée,
- la figure 3 montre également en éclaté l'essentiel des pièces d'habillage des éléments structurels du cockpit illustré sur les figures 1 et 2,
- la figure 5 est un schéma de bâti/châssis de véhicule,

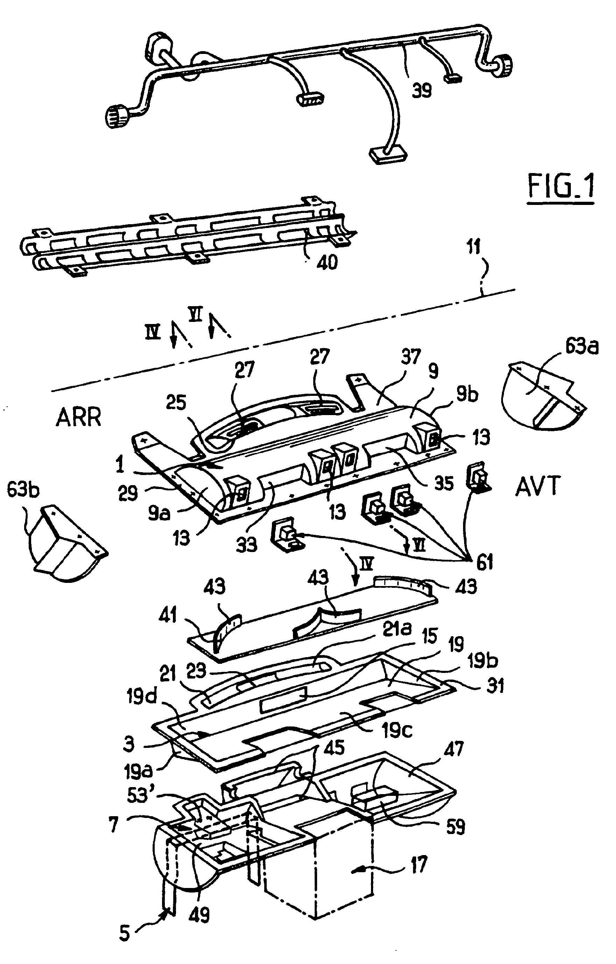

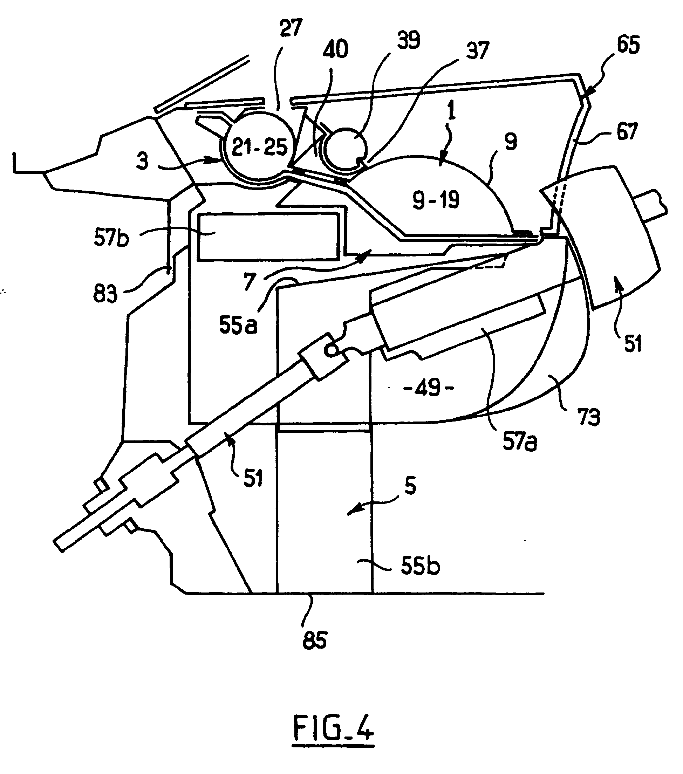

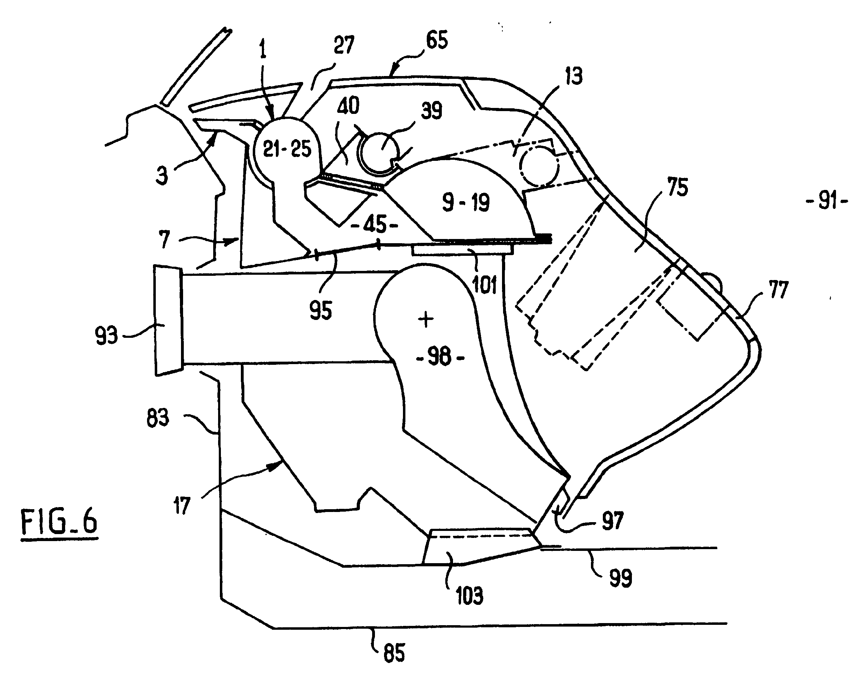

- les figures 4 et 6 montrent deux sections du cockpit assemblé et monté sur un véhicule (coupes IV-IV et VI-VI indiquées figure 1),

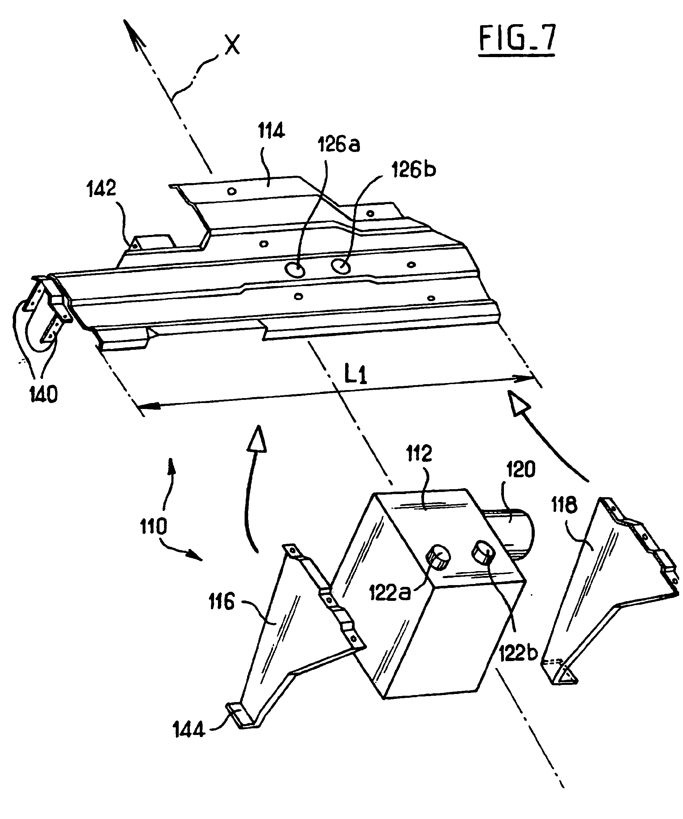

- les figures 7, 8 et 9 montrent schématiquement trois étapes successives de réalisation d'une variante du cockpit de l'invention,

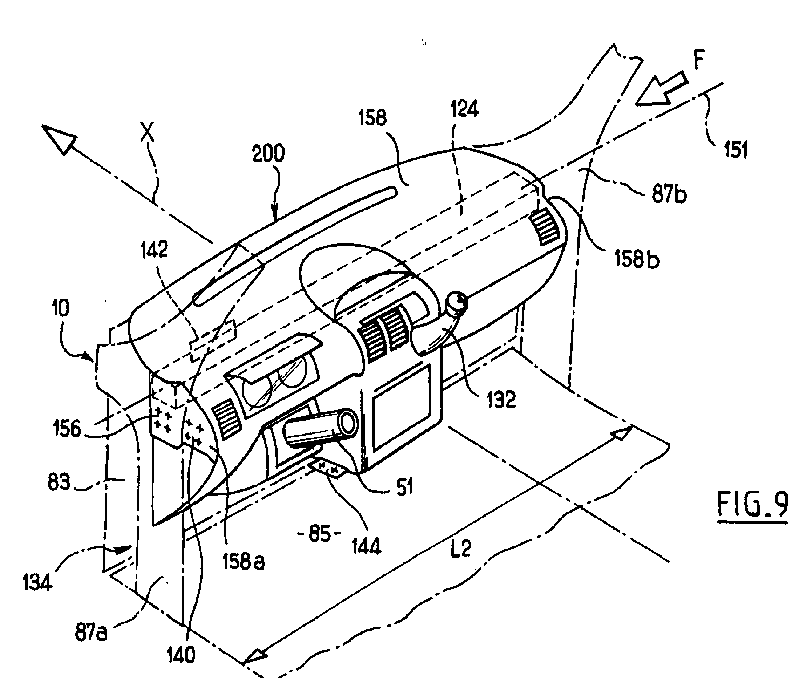

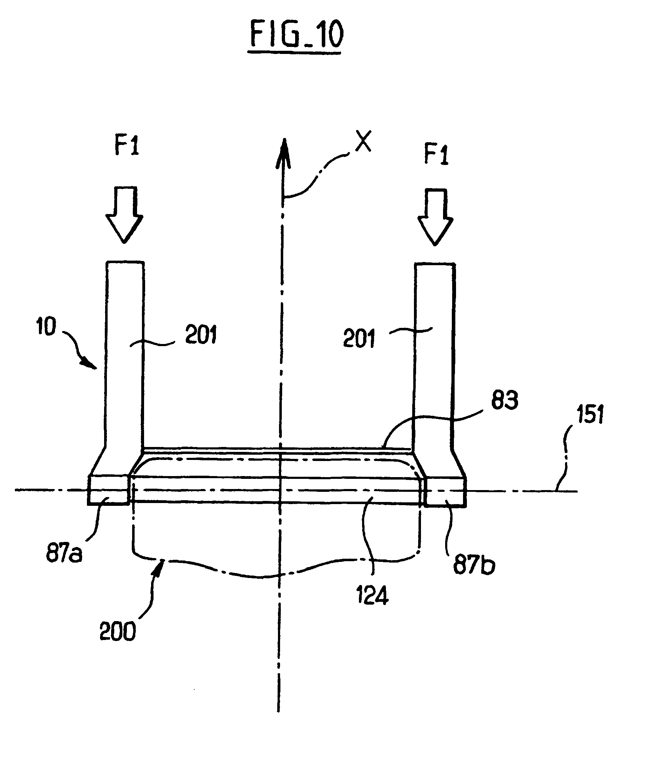

- et la figure 10 simule un test de choc (voir également figure 9).

Sur la figure 1 tout d'abord, on voit donc représentés les éléments structurels principaux du cockpit.

Il s'agit du bloc-support (ou plateau-support) supérieur 1, du bloc support (ou plateau-support) inférieur 3, complémentaire du premier, ainsi que du portique antivibrations 5.

Les blocs-supports supérieur et inférieur 1 et 3 sont de préférence complétés par un troisième bloc-support 7 auquel est fixé le portique antivibrations 5 (qui, sinon, serait fixé au bloc 3).

Les trois blocs se présentent chacun sensiblement sous la forme d'un plateau. Le bloc-support supérieur 1 intègre, dans sa forme, un demi-canal supérieur ouvert vers le bas, 9.

Ce demi-canal 9 s'étend suivant la direction longitudinale principale 11 (ou "direction générale d'allongement") du bloc 1. Les extrémités longitudinales du canal 9 sont fermées par deux cloisons d'extrémités 9a, 9b. Etant donné que le demi-canal 9 va constituer, avec le demi-canal inférieur 19, un conduit d'air pour le chauffage/refroidissement de l'habitacle du véhicule auquel le cockpit est destiné, le demi-canal supérieur 9 intègre des sorties d'aération (en l'espèce, frontales) 13, tandis que le demi-canal inférieur 19 présente au moins un orifice d'entrée d'air, tel que 15, adapté pour communiquer avec l'unité de chauffage et de ventilation schématisée en 17 (voir également figure 6). Des cloisons latérales d'extrémité 19a, 19b ferment le canal 19 du bloc 3 dont on notera que le fond est constitué par une paroi 19c inclinée vers le bas d'avant (A*VT*) vers l'arrière *(ARR)* où une paroi dressée 19d intègre l'arrivée d'air 15.

Plus à l'arrière encore, le bloc 3 intègre un deuxième demi-canal 21 dont la paroi arrière dressée 21a comporte une entrée 23 pour l'air de désembuage du pare-brise.

Le demi-canal 21 est complémentaire d'un autre demi-canal 25 formé longitudinalement (parallèlement à l'axe 11) le long de l'arrière du bloc supérieur 1.

Dans la paroi (supérieure) de ce demi-canal supérieur 25, sont ménagés un ou plusieurs orifices de sortie d'air de désembuage, tels que 27.

Les deux blocs 1, 3, sont liés entre eux périphériquement, après avoir été réalisés séparément

S'ils sont en matière plastique (polypropylène, par exemple, éventuellement renforcé de fibres), ils peuvent être soudés ensemble à l'endroit de leurs rebords périmétriques 29, 31.

Frontalement, entre les aérateurs avant 13, la surface extérieure du demi-canal 9 intègre des cavités ouvertes en 33, 35, respectivement pour le logement du compteur et du boîtier de coussin gonflable (non représentés).

Entre les deux renflements longitudinaux des demi-canaux 9, 25, le bloc 1 présente un canal extérieur supérieur longitudinal ouvert vers le haut 37, s'étendant parallèlement à l'axe 11, et dans lequel il va être possible de disposer des câbles électriques, tels que la partie centrale du faisceau 39.

Pour la qualité de l'écoulement de l'air dans le canal principal de circulation d'air, 9, 19, il est conseillé d'interposer intérieurement une plaque horizontale 41 comportant des déflecteurs tels que 43.

Entre l'unité 17, appelée également "groupe de chauffage 17", et en particulier l'entrée 15 de l'air dans le canal de distribution 9 - 19, il peut être prévu d'interposer un boîtier de diffusion/répartition d'air, tel que 45, intégré au troisième bloc inférieur 7, ou fixé à lui intérieurement.

Le boîtier de diffusion d'air 45 constitue une zone d'interface qui est située en partie centrale (vers l'arrière) du bloc 7, de manière à alimenter les orifices d'entrée 15 et 23.

De part et d'autre du boîtier d'interface 45, le bloc inférieur 7 comprend, parallèlement à l'axe général longitudinal 11 (commun aux trois blocs), deux espaces creux, ouverts vers le haut, respectivement 47 et 49.

On a supposé que le cockpit illustré est destiné à un véhicule ayant un poste de conduite à gauche.

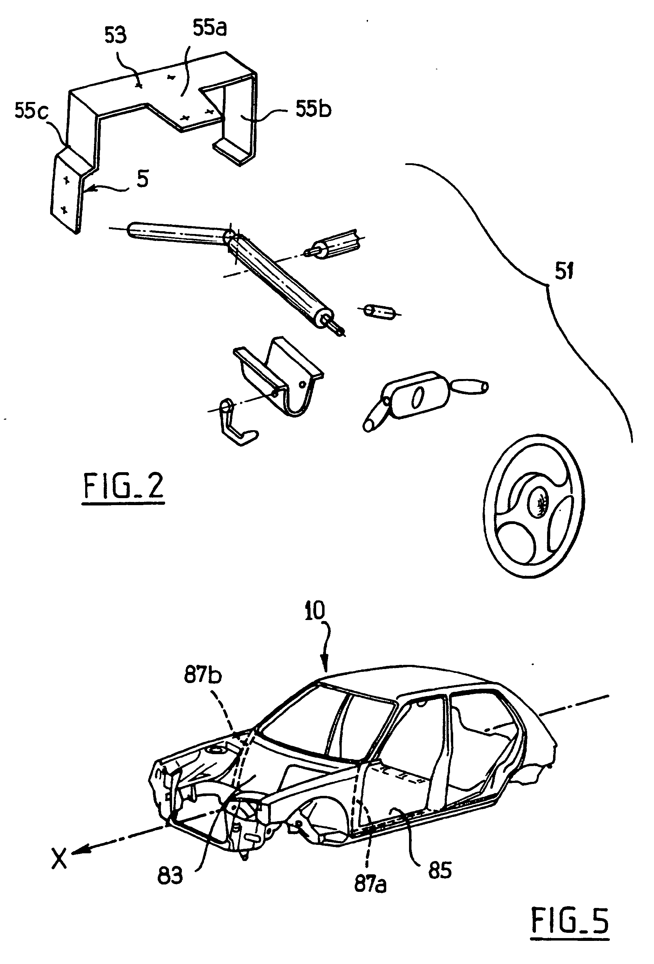

Ainsi, la cavité de gauche 49 intègre-t-elle une zone de passage et de fixation de la colonne de direction repérée dans son ensemble 51 sur la figure 2.

A cet endroit, la colonne de direction est prévue pour être fixée à la barre antivibrations 5, à travers des points d'ancrage 53. La barre 5 est en outre fixée en 53' au bloc 7 (figure 1).

La barre antivibrations 5 a pour but d'assurer une zone de fixation pour la colonne de direction, en constituant un amortisseur de vibrations, lesquelles s'amortissent ensuite dans les zones environnantes, par diffusion.

On aura noté que la barre antivibrations 5 présente une poutre (ou barre) supérieure 55a, s'étendant parallèlement à l'axe 11. Elle se prolonge en outre latéralement par deux jambes sensiblement verticales 55b, 55c, adaptées de préférence pour être fixées à la structure métallique du véhicule, telle en particulier que le plancher du châssis du véhicule.

Une alternative peut consister à fixer la barre transversale 5 à la carrosserie, à l'un des piliers "A", et au tunnel du même châssis.

La barre 5 pourra être une pièce métallique (tôle, magnésium,...) ou une pièce hybride moulée (plastique/métal).

A l'intérieur de la cavité 49, où passe la colonne de direction, on peut en particulier prévoir de loger différents boîtiers électroniques ou des composants électriques utiles au fonctionnement du véhicule.

Dans la cavité 47, peut être en particulier logé un dispositif de protection pour les genoux, tel qu'un boîtier d'amortissement 59.

Des aérateurs 61 (à disposer en regard des orifices 13) complètent l'ensemble qui vient d'être présenté et des flasques latéraux 63a, 63b, peuvent être prévus pour la fixation aux piliers "A" du véhicule des blocs 1, 3, 7, assemblés entre eux.

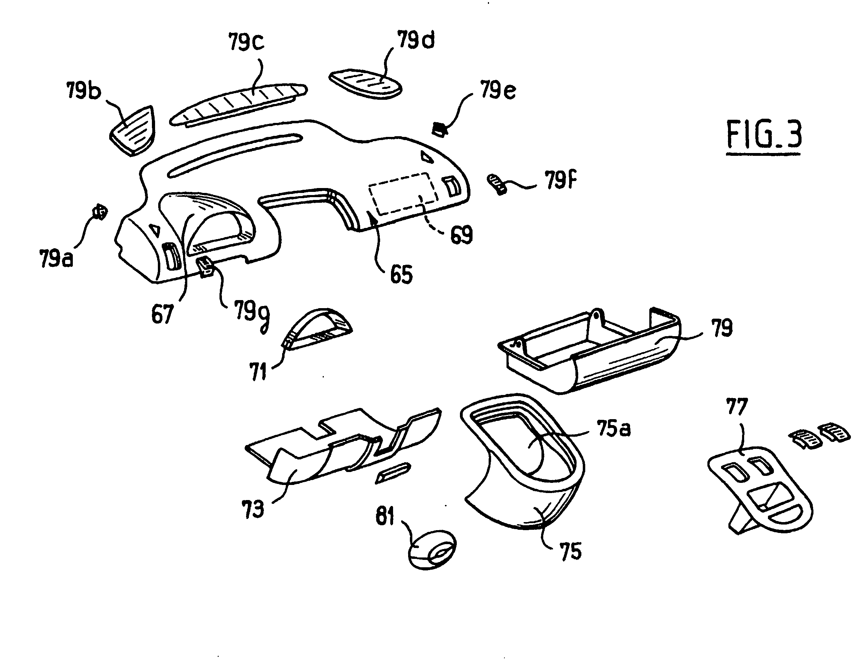

Sur la figure 3, on voit représentés les principaux éléments d'habillage de l'ensemble structurel 1, 3, 7.

On peut ainsi comprendre que la coiffe supérieure 65 vient recouvrir le bloc supérieur 1 en étant fixée à lui par tous moyens appropriés (vissage, en particulier). II peut s'agir d'une pièce monobloc, par exemple en polypropylène. Elle est typiquement beaucoup moins résistante mécaniquement que les plateaux 1, 3, et peut être constituée d'une peau extérieure doublée intérieurement par une couche de mousse. Elle peut être réalisée notamment par injection, thermoformage, moussage. Sur la coiffe 65, on reconnaîtra en 67 la zone de visière (devant faire face à la zone 33 du compteur de la figure 1), ainsi qu'un emplacement dissimulé en 69 pour la réalisation d'une zone de coussin gonflable, à disposer en regard de la zone 35 de réception du module de coussin gonflable.

En 71, on trouve la visière du combiné porte-instruments, en 73, l'habillage inférieur de la planche de bord, du côté du conducteur (à disposer sous la partie gauche du bloc inférieur 7 : espace 49 et dessous de la colonne de direction). En 75, est représentée schématiquement une console centrale, à adapter par-dessus la partie centrale du cockpit et en face du groupe de chauffage/climatisation 17. En 77, est schématisé le panneau support "double DIN" qui va habiller l'espace frontal ouvert 75a de la console 75 et servir notamment à recevoir les éléments de commande du groupe de chauffage 17, ainsi que d'éventuels interrupteurs utiles au fonctionnement du véhicule. La boîte à gants est schématisée en 79. Elle est prévue pour s'engager en regard du volume 47, au dessus de la zone de protection 59.

D'autres pièces de finition sont également prévues pour recouvrir notamment les sorties d'aération/ désembuage, habiller le dessous de la colonne de direction, .... (voir pièces 79a, 79b, 79c, 79d, 79e, 79f, 79g, et 81 sur la figure 3).

Sur la vue schématique en coupe de la figure 4, qui correspond donc à une vue dans l'état assemblé des pièces et éléments des figures 1, 2 et 3, on retrouve le bloc-support supérieur 1 surmontant le bloc intermédiaire 3 pour constituer les deux canaux de circulation d'air 9-19 et 21-25. Juste sous le bloc-support 3, on trouve le bloc-support inférieur 7 avec sa forme en caisson, à l'endroit de l'espace 49. A l'intérieur de cet espace, on peut noter la présence des boîtiers électroniques 57a, 57b (boîtier d'interface pour le groupe de chauffage, boîtier pour la sécurité en cas de choc, boîtier pour le matériel de navigation, ...).

Le bloc-support inférieur 7 est revêtu frontalement par le panneau d'habillage 73.

En 51, on retrouve schématiquement la colonne de direction, et en 83, 85, on voit repérés respectivement le tablier du véhicule et le plancher du châssis de ce même véhicule que l'on retrouve sur la figure 5 où le tablier 83 s'étend entre les deux piliers "A", 87a, 87b, du véhicule 10.

Sur la figure 4, l'ensemble pédalier et ses organes associés (bloc cylindre, ...) n'ont pas été représentés, pour faciliter la lisibilité du dessin.

Sur cette figure, on notera la forme arquée (portion de cylindre) des parties de canaux 9-21 du bloc 1 et la forme par contre plus anguleuse du demi-canal 19 du bloc 3.

La coiffe 65 recouvre les deux canaux, tout en laissant l'emplacement pour les sorties d'air, telles que 27.

Dans le creux 37, on peut noter la présence du câblage 39, en place dans une goulotte de gainage 40, laquelle est fixée au bloc 1.

Sur la figure 4, on notera encore la présence de la barre antivibrations 5 avec son plateau central horizontal 55a auquel est fixée la colonne de direction 51, par l'intermédiaire de l'élément de connexion 89 (non représenté sur la figure 2).

Le montant latéral 55c de la barre antivibrations 5 est, quant à lui, prévu pour être fixé aux piliers "*A*" 87a (figure 5), par tous moyens appropriés (partie basse).

Sur la figure 6, on retrouve les blocs 1, 3, 7, avec les canaux d'air 9-19 et 21-25, la coiffe supérieure 65, le faisceau de câbles 39, le tablier 83 et le plancher 85, en particulier.

Face à l'habitacle 91, on voit en outre la console centrale 75 et son panneau d'habillage 77. La console 75 est fixée aux blocs 1 et 7. Elle peut l'être également à l'unité de chauffage et de ventilation 17.

L'unité de chauffage étant traditionnelle, elle ne sera pas décrite. On notera simplement l'entrée d'air en 93, les sorties d'air supérieure et inférieure, respectivement 95 et 97 (air de pieds).

La sortie d'air 95 communique avec le boîtier d'interface 45 du bloc 7 qui transmet cet air vers les canaux 9-19 et 21-25.

Classiquement, l'unité 17 comprend un ventilateur 98, un évaporateur, ...

Cette unité s'étend en l'espèce entre la surface inférieure du bloc 7 et un faux-plancher local 99 qui s'étend, à l'endroit du tunnel de plancher, au-dessus du plancher 85 (à noter qu'éventuellement, le faux-plancher 99 pourrait être supprimé).

L'unité 17 est par ailleurs montée dans des glissières supérieure et inférieure, 101, 103, liées respectivement à la face inférieure du bloc 7 et à la face supérieure du faux-plancher 99. Les glissières sont orientées parallèlement à l'axe longitudinal *"X"* du véhicule, de manière que l'unité 17 puisse coulisser suivant cette direction, en particulier pour son éventuel démontage du côté de l'habitacle 91.

Sur les figures 7, 8 et 9, on voit un autre exemple de réalisation d'un cockpit conforme à l'invention.

Sur la figure 7, tout d'abord, on montre schématiquement l'étape de montage d'une structure antivibrations 110, y compris la fixation à elle d'une unité de chauffage et de ventilation 112.

La structure antivibrations 110 comprend une plaque globalement plane et sensiblement horizontale 114 et deux pieds dressés, sensiblement verticaux, 116, 118. Les flèches et les points noirs sur la figure 7 montrent les zones de fixation des pieds sous la plaque 114.

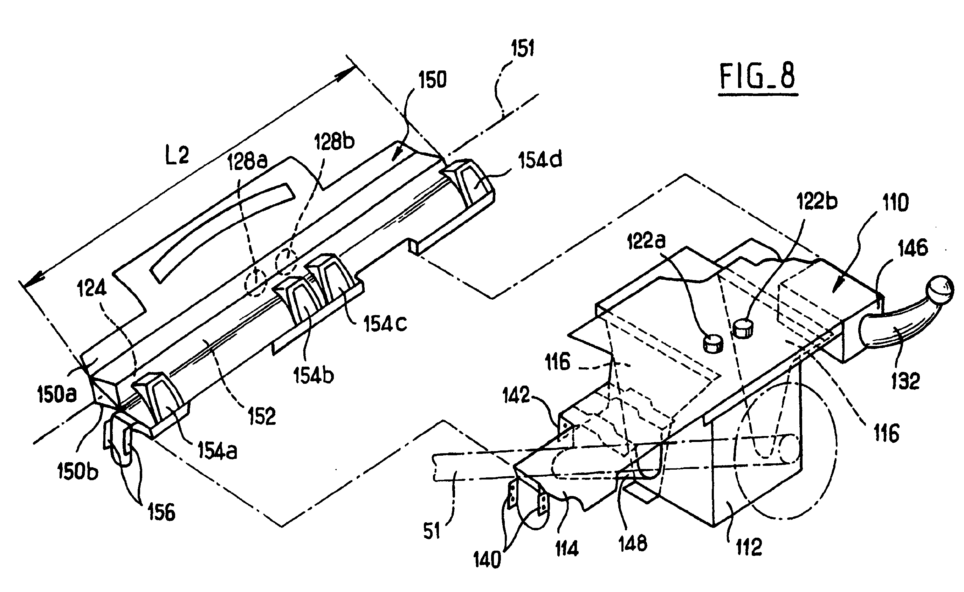

Typiquement, l'unité de chauffage et de ventilation 112 génère un air à température régulée, à partir d'une prise d'air latérale 120, deux sorties 122a, 122b, dirigeant cet air vers le conduit d'air repéré 124 sur la figure 8, à travers les ouvertures 126a, 126b ménagées à travers la plaque antivibrations 114, ainsi que 128a, 128b, ménagées en regard, dans le fond du conduit 124, de manière que les conduits d'entrée d'air 122a, 122b, y débouchent

La plaque 114 peut être métallique (alliage léger, ...) ou en plastique.

Par rapport à la direction longitudinale (direction d'avance "*X*" du véhicule), la plaque antivibrations 114 présente une longueur "*L*_{*1*"} s'étendant perpendiculairement à cet axe "*X*", et sur une partie seulement de la largeur "*L*₂" du véhicule (largeur mesurée entre les piliers "*A*", 130a, 130b - voir figure 9). On notera que les dimensions n'ont pas été particulièrement respectées entre les figures 7, 8 et 9 et que par exemple, le levier de changement de vitesse 132 de la figure 8 sera typiquement situé plus nettement vers le conducteur qu'il ne paraît l'être sur les figures 8 et 9.

Quoi qu'il en soit, la structure antivibrations 110 est prévue pour être fixée en trois points à la structure (repérée dans son ensemble 134 sur la figure 9) du véhicule. Sur la figure 9, seules certaines parties de cette structure ont été schématisées : le plancher 85, les piliers "A" 87a, 87b et le tablier 83 (cloison ou armature de séparation entre l'habitacle et le compartiment moteur).

Sur la figure 7, les repères 140 et 142 marquent deux pattes de fixation de la plaque antivibrations 114 à la structure 134 du véhicule. On retrouve d'ailleurs ces deux repères sur la figure 9. Ces deux fixations permettent de lier la plaque antivibrations 114 d'une part, au pilier "A" 87a (fixations 140), et au tablier 83 (fixation 142). Au moins une troisième fixation est conseillée. En l'espèce, elle est obtenue par l'intermédiaire de l'un au moins des deux pieds d'appui 116,118, par l'intermédiaire par exemple de la patte 144 du pied 116 que l'on distingue sur la figure 9 comme étant fixé au plancher 85 du véhicule.

Sur la figure 8, la plaque antivibrations 114 est représentée avec des éléments déjà fixés sur elle. Ainsi, l'unité de chauffage et de ventilation 112 est disposée sous cette plaque, entre les pieds dressés, 116, 118. On remarque également les deux conduits d'alimentation en air 122a, 122b, qui traversent la plaque 114. Le levier de changement de vitesse 132 et son boîtier de commande 146 sont eux aussi fixés sous la plaque antivibrations 114, par exemple par vissage. Plus près de l'extrémité latérale gauche de la plaque, on voit également un berceau 148 de maintien de la colonne de direction 51. Le berceau 148 est fixé sous la plaque 114, par exemple par vissage. Ainsi, la plaque 114 va limiter les vibrations dans la colonne de direction et dans le levier de vitesse qui y sont suspendus. La forme "en potence" de la plaque 114 avec le (ou les deux) pied(s) d'appui, est à priori préférée à la forme en portique (repère 5 des figures 1 et 2).

Une fois les éléments précités assemblés à la plaque antivibrations, on va fixer celle-ci à la pièce structurelle 150 de la figure 8.

A l'image de ce qui a été présenté en relation avec la figure 1, la pièce 150 comprend un plateau supérieur 150a et un plateau inférieur 150b définissant chacun localement une forme en demi-canal et qui, une fois assemblés comme sur la figure 8, intègrent un conduit d'air intérieur 152 qui s'étend sur toute la longueur "*L*₂" de cette pièce 150, laquelle longueur correspond (aux tolérances près) à la largeur "*L*₂" du véhicule, entre les piliers "*A*", 87a, 87b (figure 9). La pièce structurelle 150 est, mécaniquement, la pièce maîtresse du cockpit par laquelle va transiter tout l'effort que doit supporter le cockpit, en cas de choc.

A cet effet, le conduit 124, qui s'étend donc globalement suivant la direction 151 (laquelle est perpendiculaire à l'axe "X", une fois le cockpit monté dans le véhicule) communique avec les entrées d'air 128a, 128b, ainsi qu'avec les sorties d'air 154a, 154b, 154c, 154d.

Pour reprendre les efforts en cas de choc, la pièce structurelle 150 est directement fixée à la structure du véhicule. En l'espèce, deux pattes latérales (seule l'une est apparente sur la figure 8 où elle repérée 156) assurent, à l'endroit des côtés latéraux 158a, 158b (figure 9), la fixation de la pièce 150 aux piliers "A", 87a, 87b.

Avant cela, on aura fixé sous cette pièce 150, la plaque 114, par exemple par vissage, en ayant pris soin d'engager les conduits d'alimentation en air correctement dans les orifices d'entrée d'air du conduit 124.

Ensuite, on sera venu fixer l'habillage extérieur du cockpit, et en particulier la coiffe 158 (figure 9) que l'on aura rapportée par-dessus la pièce structurelle 150 en l'y fixant. Cet habillage (en particulier la coiffe 158) est mécaniquement beaucoup moins résistant que la pièce 150.

Concernant cette dernière, sa fabrication conseillée comme une pièce moulée, essentiellement en matière plastique, est appréciable. Une adjonction de fibres de renfort (par exemple, fibres de verre) ou des inserts métalliques (pièce hybride typiquement fabriquée par surmoulage) lui assureront la résistance mécanique désirée.

Pour tester la tenue à l'effort du cockpit de l'invention, et en particulier celui repéré dans son ensemble 200 sur la figure 9, on procédera comme suit :

Tout d'abord, on monte le cockpit repéré dans son ensemble 200 sur la figure 9, à l'intérieur du véhicule 210 prévu pour le recevoir (voir figures 9 et 10).

Typiquement, le cockpit 200 conforme à l'invention comprend les pièces déjà citées 110, 150, 158 et les différents éléments qui sont fixés à elles (unité 112, colonne 51, levier 132, etc ...).

Le cockpit 200 est, dans l'exemple envisagé, fixé de part et d'autre (axe 151) aux piliers "A", 87a, 87b, ainsi qu'au tablier 83 (fixations 142).

Le véhicule 10 dans lequel le cockpit est monté est "complet", c'est-à-dire, prêt à la vente et donc assez différent de ce qui est illustré très schématiquement sur les figures 5 ou 10 où seule une partie de la structure de ce véhicule est schématiquement illustrée.

En d'autres termes, il s'agit pour le test d'un véhicule "de série", totalement équipé.

Pour la conduite des tests en vigueur, on se reportera aux normes existantes qui les définissent, ou au site internet de la Fédération Internationale d'Automobile (F.LA. - Genève - Suisse) : "http:www.fia.com", rubrique "tourisme/safet/safint. html" notamment, où les tests de chocs en vigueur au moment du dépôt de la présente demande sont indiqués comme étant de trois ordres : choc frontal à 56 km/h, choc latéral à 50 km/h, voire choc (également frontal) avec un piéton à 40 km/h.

Sur la figure 9, la flèche "F" parallèle à l'axe 151 simule l'effort maximum du "test avec choc latéral" que doit pouvoir encaisser le cockpit 200 en respectant des valeurs de réaction prédéterminées, normalisées. Avantageusement, la poutre/conduit 124 du cockpit doit en elle-même respecter les valeurs imposées par cette norme, y compris dans le cadre d'une simulation qui supprimerait tous les autres éléments du cockpit et ne laisserait en place que cette poutre 124. Une telle conception permet, en d'autres termes, de décharger les autres parties, pièces ou éléments du cockpit 200 du rôle de résistance mécanique à l'effort maximum induit par les test de choc, étant précisé que le test de choc frontal simulé par les flèches "Fi" sur la figure 10, doit induire la même capacité de résistance qu'aux efforts maximum "*F*₁" générés transversalement sur la poutre 124, avantageusement considérée seule.

Sur la figure 10, les efforts "*F*_{*1*}" sont donc transmis au cockpit 200 (et plus particulièrement à la poutre/conduit transversal 124) par l'intermédiaire des longerons 201 et des piliers "A".

Dans une réalisation intéressante, l'effort, ou chacun des efforts, maximum auquel le cockpit doit pouvoir résister dans le cadre des essais menés pourra être scindé en deux parties : une première partie d'efforts prévus pour être encaissée par le cockpit 200, et une seconde partie prévue pour être encaissée par la structure du véhicule (piliers "A", tablier, portière, ...). A cet égard, il est alors conseillé que moins de 50 % de l'effort maximum considéré soit à supporter par le cockpit. 30 % (à 20 % près) paraît être une valeur appropriée. Là encore, c'est de préférence la poutre/conduit 124 qui aura été dimensionnée et conformée pour pouvoir supporter, conformément à un cahier des charges préétabli, cette partie de l'effort maximum considéré.

A toutes fins utiles, on finira la description par quelques remarques :
L'expression "plaque" indique, pour les pièces concernées, qu'il s'agit d'une pièce relativement peu épaisse (comme cela est le cas pour la pièce structurelle 150 par rapport au cockpit 200 dans son ensemble). Mais cela n'implique pas qu'il s'agit nécessairement d'une pièce plane (elle peut être galbée, y compris avec une forme par exemple en cornière).
L'expression "plateau" correspond sensiblement à l'expression "plaque", tout en insistant toutefois sur l'aspect globalement plan de la pièce et sur le fait qu'elle s'étend essentiellement sensiblement horizontalement
Eventuellement, la "potence" ou le "portique" appartenant à la structure antivibrations pourrait se présenter comme un arceau, même si la forme en potence, comme sur la figure 8, est a priori préférée.
Les "côtés latéraux" du cockpit correspondent aux côtés 158a, 158b de la figure 9. Ils sont repérés par rapport à l'axe longitudinal d'avance "*X*" du véhicule, de telle sorte que le cockpit (ou la poutre/conduit 124) présente une direction principale d'allongement transversale à l'axe *"X".*

Concernant la fixation entre le cockpit (et en particulier, la pièce structurelle 150) et la structure 134 du véhicule, les types conventionnels de fixation (vissage, soudage, ...) sont autorisés. Il se pourrait également que la fixation ne s'effectue pas avec les piliers "*A*", mais par exemple essentiellement avec le tablier 83. D'ailleurs, le cockpit est indiqué comme destiné à être positionné "à proximité de ces piliers "A".

Il doit être également clair que l'unité de chauffage et de ventilation peut être une unité de climatisation. Il s'agit en pratique du bloc principal dans lequel sont inclus le radiateur, l'évaporateur, ...

Le terme "unique" appliqué à la poutre creuse, telle que la poutre 124, indique qu'il s'agit d'un ensemble unitaire, même si le conduit peut être scindé en plusieurs éléments ou tronçons, s'étendant éventuellement dans des plans différents, voire des directions différentes, la direction d'allongement demeurant malgré tout globalement parallèle ou confondue avec l'axe 151.

Par ailleurs, lorsqu'on indique que "la poutre est adaptée pour résister sensiblement à l'intégralité de l'effort maximum auquel le cockpit doit pouvoir lui-même résister", on accorde à la poutre/conduit en question une tolérance d'environ 10%.

## Revendications

1. Cockpit de planche de bord d'un véhicule automobile comprenant une structure incluant un plancher et des piliers "A", le cockpit présentant une direction principale d'allongement (11,151) ayant une longueur (L), cette direction principale intersectant deux côtés latéraux (9a, 9b; 158a, 158b) du cockpit destinés à être positionnés à proximité desdits piliers "*A*" du véhicule, le cockpit étant adapté pour résister, dans des conditions déterminées, à un effort maximum, ce cockpit comprenant :
- des moyens de fixation (156,142,144 ; 63a, 63b) pour fixer le cockpit à la structure du véhicule et transmettre, de l'un à l'autre, une partie au moins dudit effort,
- des moyens de renfort transversal (9,124) s'étendant globalement suivant ladite direction d'allongement, lesdits moyens de renfort transversal comprennent une unique poutre creuse (9, 124) qui s'étend globalement suivant la direction d'allongement (11,151) sur l'essentiel au moins de ladite longueur, et qui définit un conduit de circulation d'air en étant, de ce fait, reliée à des ouvertures d'entrée d'air (15, 128a, 128b) et de sortie d'air (13,154a, 154d) vers le véhicule, cette poutre présentant en outre une résistance mécanique lui permettant de résister sensiblement à l'intégralité de l'effort maximum auquel le cockpit doit pouvoir résister,
**caractérisé en ce qu'**il comprend une structure antivibrations (5, 110) qui est liée à la poutre (9,124) et qui comprend une potence ou un portique (116) auquel (à laquelle) est relié l'un parmi une colonne de direction (51) et un levier de changement de vitesse (132), pour absorber les vibrations pouvant être transmises dans (ou vers) la colonne ou le levier, la structure antivibrations comprenant au moins deux zones de fixation (140,142) éloignées l'une de l'autre pour deux telles liaisons avec la structure (134) du véhicule.

2. Cockpit selon la revendication 1, **caractérisé en ce que** la poutre (9,124) qui définit le conduit d'air, et les ouvertures d'entrée et de sortie d'air (13,15 ; 128a, 154a) sont intégrées à une pièce structurelle moulée (1,3 ; 150) constituée essentiellement de matière plastique, globalement en forme de plaque et portant certains au moins des moyens de fixation (63a, 63b 156, 142), cette pièce structurelle étant recouverte par une coiffe d'habillage (65, 158) qui est fixée à elle et qui est moins résistante mécaniquement que la pièce structurelle.

3. Cockpit selon la revendication 2, **caractérisé en ce que** la pièce structurelle comprend :
- un premier plateau (1,150a) s'étendant globalement dans un plan horizontal et présentant une longueur suivant ladite direction d'allongement, le premier plateau intégrant une première partie supérieure de canal (9), ouvert vers le bas et s'étendant globalement suivant cette direction,
- un second plateau (3,150b) s'étendant globalement dans un plan horizontal et présentant une longueur suivant la direction d'allongement, le second plateau intégrant une seconde partie (19) inférieure de canal, ouverte vers le haut, et s'étendant généralement suivant cette direction,
- les premier et second plateaux étant liés ensemble pour définir ledit conduit (9,124) de circulation d'air.

4. Cockpit selon l'une quelconques des revendications 2 ou 3, **caractérisé en ce que** la structure antivibrations comprend une plaque (114) s'étendant globalement dans un plan horizontal et présentant une longueur suivant la direction générale d'allongement du cockpit, la plaque étant. disposée sous la pièce structurelle (150) et fixée à elle ainsi qu'à une jambe de force (116,118) dressée sensiblement verticalement et liée à ladite plaque, à l'écart des côtés latéraux du cockpit (158a, 158b).

5. Cockpit selon l'une quelconque des revendications précédentes, **caractérisé en ce que** la structure antivibrations comprend :
- l'une parmi une plaque ou une barre (55a,114) , s'étendant globalement suivant la direction générale (11,151) d'allongement du cockpit, dans une zone inférieure de ce cockpit, et à laquelle est lié(e) la colonne ou le levier, pour la transmission des vibrations,
- et au moins un pied dressé (55b, 55c; 116,118) sous la plaque ou la barre (55a, 114), ce(s) pied(s) étant relié(s) à des moyens de liaison (144) pour le(s) relier au plancher du véhicule, afin de transmettre lesdites vibrations vers ce plancher.

6. Cockpit selon l'une quelconque des revendications précédentes, **caractérisé en ce que** la structure antivibrations (5,110) s'étend, depuis le côté latéral du cockpit (9a, 158a) le plus proche de la colonne de direction (51), jusqu'au-delà de la zone d'emplacement de cette colonne, mais sur une partie seulement de la longueur du cockpit.

7. Cockpit selon l'une quelconque des revendications précédentes, **caractérisé en ce qu'**il est lié, par l'intermédiaire de la structure antivibrations (5,110), à une unité (17,112) de chauffage et de ventilation s'étendant sous la structure antivibrations et adaptée pour générer de l'air à température régulée vers les moyens d'entrée d'air reliés au conduit de circulation d'air (9, 124).

8. Cockpit selon la revendication 7, **caractérisé en ce qu'**il comprend des glissières (101) pour la liaison entre le cockpit et l'unité de chauffage et de ventilation (17).

9. Véhicule automobile présentant une direction longitudinale d'avance et comprenant :
- une structure (134) incluant des piliers *"A"* (87a, 87b),
- un cockpit (200) présentant une direction principale d'allongement (11,151) ayant une longueur (*L*₁), cette direction principale qui est sensiblement perpendiculaire à la direction longitudinale (X)du véhicule, intersectant deux côtés latéraux (9a, 9b ; 158a, 158b) du cockpit positionnés à proximité desdits piliers "A" du véhicule, le cockpit étant adapté pour résister, dans des conditions déterminées, à un effort maximum, ce cockpit comprenant :
• des moyens de fixation fixation (156,142,144 ; 63a, 63b), pour fixer le cockpit à la structure du véhicule et transmettre, de l'un à l'autre, une partie au moins dudit effort,
• des moyens de renfort transversal (1, 3, 124) s'étendant globalement suivant ladite direction d'allongement, lesdits moyens de renfort transversal comprennent une unique poutre creuse (9, 19 ; 124) qui s'étend globalement suivant la direction d'allongement (11, 151) sur l'essentiel au moins de ladite longueur (*L*_{*1*}), et qui définit un conduit de circulation d'air en étant, de ce fait, reliée à des ouvertures d'entrée d'air (15 128a, 128b) et de sortie d'air (13 ; 154b, 154c) vers le véhicule,
- ce véhicule étant conçu pour encaisser un choc frontal (*F*₁) déterminé, exercé sensiblement suivant la direction longitudinale (X) du véhicule et transmis au cockpit, par l'intermédiaire de la structure (158) du véhicule (10), ledit effort maximum auquel doit résister le cockpit est inférieur à environ 50 % de l'effort correspondant audit choc frontal (F₁), le reste étant essentiellement supporté par la structure (134)du véhicule,
ledit véhicule étant **caractérisé en ce qu'**il comprend une structure antivibrations (5, 110) qui est liée à la poutre (9,124) et qui comprend une potence ou un portique (116) auquel (à laquelle) est relié l'un parmi une colonne de direction (51) et un levier de changement de vitesse (132), pour absorber les vibrations pouvant être transmises dans (ou vers) la colonne ou le levier, la structure antivibrations comprenant au moins deux zones de fixation (140, 142) éloignées l'une de l'autre pour deux telles liaisons avec la structure (134) du véhicule.

10. Véhicule selon la revendication 9, **caractérisé en ce que** :
- la poutre qui définit le conduit d'air, et les ouvertures d'entrée et de sortie d'air, sont intégrées à une pièce structurelle moulée (1, 3 ; 150) constituée essentiellement de matière plastique, globalement en forme de plaque et portant certains au moins des moyens de fixation (63a, 63b ; 156), cette pièce structurelle étant recouverte par une coiffe d'habillage (65; 158) qui est fixée à elle et qui est moins résistante mécaniquement que la pièce structurelle (1, 3; 150) et
- les moyens de fixation (63a, 63b ; 140, 142, 144, 156) du cockpit à la structure du véhicule transmettent l'effort maximum auquel le cockpit doit résister de telle sorte que sensiblement l'intégralité de cet effort soit encaissé par ladite poutre (1,3; 124), laquelle s'étend continûment sur la quasi totalité de la longueur (*L*_{*1*}) du cockpit et présente une résistance mécanique adaptée pour résister, à cet effort maximum, sans rupture.

## Patentansprüche

1. Cockpit mit Armaturenbrett eines Kraftfahrzeuges mit einem Aufbau, der einen Boden und "A"-Stützen beinhaltet, wobei das Cockpit eine Hauptlängsrichtung (11, 151) mit einer Länge (L) aufweist, diese Hauptrichtung zwei Lateralseiten (9a, 9b; 158a, 158b) des Cockpits schneidet, die dazu bestimmt sind, in der Nähe der "A"-Stützen des Fahrzeuges positioniert zu werden, und das Cockpit geeignet ist, unter bestimmten Bedingungen einer Maximalbelastung zu widerstehen, wobei dieses Cockpit aufweist:
- Befestigungsmittel (156, 142, 144; 63a, 63b) zum Befestigen des Cockpits an dem Aufbau des Fahrzeuges und zum Übertragen mindestens eines Teils der Belastung von dem einen zum anderen,
- transversale Verstärkungsmittel (9, 124), die sich global der Längsrichtung folgend erstrecken, wobei die transversalen Verstärkungsmittel einen einzigen hohlen Träger (9, 124) aufweisen, der sich global der Längsrichtung (11, 151) folgend wenigstens auf dem Hauptteil der Länge erstreckt und eine Zirkulationsleitung für Luft **dadurch** bestimmt, daß er mit Öffnungen zum Lufteintritt (15, 128a, 128b) und zum Luftaustritt (13, 154a, 154d) zu dem Fahrzeug hin verbunden ist, wobei dieser Träger ferner einen mechanischen Widerstand aufweist, der ihm erlaubt, im wesentlichen vollständig der Maximalbelastung zu widerstehen, welcher das Cockpit Widerstand leisten muß,
**dadurch gekennzeichnet, daß** es einen Antivibrationsaufbau (5, 110) aufweist, der mit dem Träger (9, 124) verbunden ist und einen Arm oder einen Rahmen (116) aufweist, mit dem eine Lenksäule (51) oder ein Gangschaltungshebel (132) verbunden ist, um die Vibrationen zu absorbieren, welche in (oder zu) der Säule und dem Hebel übertragen werden können, wobei der Antivibrationsaufbau mindestens zwei Befestigungszonen (140, 142) aufweist, die für zwei solche Verbindungen mit dem Aufbau (134) des Fahrzeuges voneinander entfernt sind.

2. Cockpit nach Anspruch 1, **dadurch gekennzeichnet, daß** der Träger (9, 124), welcher die Luftleitung bestimmt, und die Öffnungen sowohl für den Eintritt als auch den Austritt der Luft (13, 15; 128a, 154a) in einem geformten Aufbauteil (1, 3; 150) integriert sind, das im wesentlichen aus Kunststoffmaterial global in der Form einer Platte aufgebaut ist und mindestens einige Befestigungsmittel (63a, 63b; 156, 142) trägt, wobei dieses Aufbauteil von einer Verkleidungshaube (65, 158) bedeckt ist, die an ihm befestigt ist und die mechanisch weniger widerstandsfähig als das Aufbauteil ist.

3. Cockpit nach Anspruch 2, **dadurch gekennzeichnet, daß** das Aufbauteil aufweist:
- eine erste Platte (1, 150a), die sich global in einer Horizontalebene erstreckt und eine Länge der Längsrichtung folgend aufweist, wobei die erste Platte einen ersten oberen Kanalteil (9) integriert, der nach unten offen ist und sich global dieser Richtung folgend erstreckt,
- eine zweite Platte (3, 150b), die sich global in einer Horizontalebene erstreckt und eine Länge der Längsrichtung folgend aufweist, wobei die zweite Platte einen zweiten unteren Kanalteil (19) integriert, der nach oben offen ist und sich im allgemeinen dieser Richtung folgend erstreckt,
- wobei die ersten und zweiten Platten miteinander verbunden sind, um die Zirkulationsleitung für Luft (9, 124) zu bestimmen.

4. Cockpit nach einem der Ansprüche 2 oder 3, **dadurch gekennzeichnet, daß** der Antivibrationsaufbau eine Tafel (114) aufweist, die sich global in einer horizontalen Ebene erstreckt und eine Länge der allgemeinen Längsrichtung des Cockpits folgend hat, wobei die Tafel unter dem Aufbauteil (150) angeordnet und an diesem sowie an einer Stütze (116, 118) befestigt ist, die im wesentlichen vertikal ausgerichtet und mit der Tafel im Abstand von den Lateralseiten (158a, 158b) des Cockpits verbunden ist.

5. Cockpit nach einem der vorhergehenden Ansprüche, **dadurch gekennzeichnet, daß** der Antivibrationsaufbau aufweist:
- eine Tafel oder einen Balken (55a, 114), die (der) sich global der allgemeinen Längsrichtung (11, 151) des Cockpits folgend in einer unteren Zone dieses Cockpits für die Übertragung der Vibrationen erstreckt und mit welcher (welchem) die Säule oder der Hebel verbunden ist,
- und mindestens einen ausgerichteten Fuß (55b, 55c; 116, 118) unter der Tafel oder dem Balken (55a, 114), wobei dieser Fuß (diese Füße) mit Verbindungsmitteln (144) verbunden ist (sind), um ihn (sie) mit dem Boden des Fahrzeuges zu verbinden, um die Vibrationen zu diesem Boden hin zu übertragen.

6. Cockpit nach einem der vorhergehenden Ansprüche, **dadurch gekennzeichnet, daß** sich der Vibrationsaufbau (5, 110) von der Lateralseite des Cockpits (9a, 158a), welche der Lenksäule (51) am nächsten ist, bis über die Zone des Standortes dieser Säule erstreckt, aber nur auf einem Teil der Länge des Cockpits.

7. Cockpit nach einem der vorhergehenden Ansprüche, **dadurch gekennzeichnet, daß** es mittels des Antivibrationsaufbaus (5, 110) mit einer Einheit (17, 112) zum Heizen und Belüften verbunden ist, die sich unter dem Vibrationsaufbau erstreckt und geeignet ist, Luft mit regulierter Temperatur zu den Eintrittsmitteln für Luft hin zu erzeugen, die mit der Zirkulationsleitung für Luft (9, 124) verbunden sind.

8. Cockpit nach Anspruch 7, **dadurch gekennzeichnet, daß** es Gleitschienen (101) für die Verbindung zwischen dem Cockpit und der Einheit zum Heizen und Belüften (17) aufweist.

9. Kraftfahrzeug, welches eine Vorschub-Längsrichtung aufweist und beinhaltet:
- einen Aufbau (134), der "A"-Stützen (87a, 87b) einschließt,
- ein Cockpit (200), das eine Hauptlängsrichtung (11, 151) mit einer Länge (L₁) aufweist, wobei diese Hauptrichtung, die im wesentlichen zu der Längsrichtung (X) des Fahrzeuges senkrecht ist, zwei Lateralseiten (9a, 9b; 158a, 158b) des Cockpits schneidet, die in der Nähe der "A"-Stützen des Fahrzeuges positioniert sind, wobei das Cockpit geeignet ist, unter bestimmten Bedingungen einer Maximalbelastung zu widerstehen und dieses Cockpit aufweist:
• Befestigungsmittel (156, 142, 144; 63a, 63b), um das Cockpit an dem Fahrzeugaufbau zu befestigen und mindestens einen Teil der Belastung von dem einen zu dem anderen zu übertragen,
• transversale Verstärkungsmittel (1, 3, 124), die sich global der Längsrichtung folgend erstrecken, wobei die transversalen Verstärkungsmittel einen einzigen hohlen Träger (9, 19; 124) aufweisen, der sich global der Längsrichtung (11, 151) folgend mindestens über den Hauptteil der Länge (L₁) erstreckt und der eine Zirkulationsleitung für Luft bestimmt und deshalb mit Öffnungen für Lufteintritt (15; 128a, 128b) und Luftaustritt (13; 154b, 154c) zu dem Fahrzeug hin verbunden ist,
- wobei dieses Fahrzeug zum Abfangen eines bestimmten frontalen Aufpralls (F₁) konzipiert ist, der im wesentlichen entlang der Längsrichtung (X) des Fahrzeuges ausgeübt und auf das Cockpit mittels des Aufbaus (158) des Fahrzeuges (10) übertragen wird, wobei die Maximalbelastung, welcher das Cockpit widerstehen muß, kleiner als etwa 50% der Belastung ist, welche dem frontalen Aufprall (F₁) entspricht, wobei der Rest im wesentlichen von dem Aufbau (134) des Fahrzeuges getragen wird, und das Fahrzeug **dadurch gekennzeichnet ist, daß** es einen Antivibrationsaufbau (5, 110) aufweist, der mit dem Träger (9, 124) verbunden ist und einen Arm oder einen Rahmen (116) aufweist, mit welchem eine Lenksäule (51) oder ein Gangschaltungshebel (132) verbunden ist, um die Vibrationen zu absorbieren, welche in (oder zu) der Säule oder dem Hebel übertragen werden können, und der Antivibrationsaufbau mindestens zwei Befestigungszonen (140, 142) aufweist, die für zwei solche Verbindungen mit dem Aufbau (134) des Fahrzeuges voneinander entfernt sind.

10. Fahrzeug nach Anspruch 9, **dadurch gekennzeichnet, daß**:
- der Träger, welcher die Luftleitung und die Öffnungen sowohl für den Eintritt als auch den Austritt der Luft bestimmt, welche in einem geformten Aufbauteil (1, 3; 150) integriert sind, im wesentlichen aus Kunststoffmaterial global in der Form einer Tafel besteht und mindestens einige Befestigungsmittel (63a, 63b; 156) trägt, wobei dieses Aufbauteil von einer Verkleidungshaube (65; 158) bedeckt ist, die an ihm befestigt ist und mechanisch weniger widerstandsfähig als das Aufbauteil (1, 3; 150) ist, und
- Befestigungsmittel (63a, 63b; 140, 142, 144, 156) des Cockpits an dem Fahrzeugaufbau die Maximalbelastung, welcher das Cockpit Widerstand leisten muß, derart übertragen, daß im wesentlichen die Gesamtheit dieser Belastung durch den Träger (1, 3; 124) abgefangen wird, der sich fortlaufend quasi auf der gesamten Länge (L₁) des Cockpits erstreckt und einen mechanischen Widerstand aufweist, der geeignet ist, dieser Maximalbelastung ohne Bruch Widerstand zu leisten.

## Claims

1. A cockpit for an automotive vehicle comprising a structural body including a floor and "A" pillars, the cockpit having a main length direction (11, 151), a length (L), the main direction crossing two lateral sides (9a, 9b; 158a, 158b) of the cockpit which are adapted to be located near the "A" pillars of the vehicle, the cockpit being adapted to withstand, in determined conditions, a determined maximum force, the cockpit comprising:
- fixation means (156, 142, 144 ; 63a, 63b) for fixing the cockpit to the structural body of the vehicle and for transfering from one to the other, at least a part of said determined maximum force,and
- transversal reinforcing means (9, 124) extending substantially along said main length direction, wherein the transversal reinforcing means comprise one hollow cross beam (9, 124) which extends substantially along the main direction (11, 151) on at least a main portion of said length and which defines an air duct and so is connected to input means (15, 128a, 128b) for air and to output means (13, 154a, 154d) for air, said cross beam further having a mechanical resistance sufficient for withstanding susbtantially said maximum force to be withstood by the cockpit,
**characterized in that** it comprises an antivibration structure (5, 110) which is connected to the cross beam (9,124) and which comprises a bracket or portal (116) to which is connected one of a steering column (51) and a gear lever (132), for absorbing vibrations transmitted in (or to) said one of the steering column and the gear lever, the antivibration structure comprising at least two fixation areas (140, 142) located apart from each other for defining two connections with the structural body (134) of the vehicle.

2. The cockpit according to claim 1, wherein said one cross beam (9, 124) which defines air duct and the input means for air and the output means for air (13, 15; 128a, 154a) are integrated to a moulded structural member (1, 3; 150) which is essentially made of plastic material, substantially plate-shaped and provided with at least some of the fixation means (63a, 63b; 156, 142), the structural member being covered with a decorative covering (65, 158) connected thereto and which is less mechanically shockproof than the structural member.

3. The cockpit according to claim 2, wherein the structural member comprises :
- a first plate extending (1, 150a) substantially in an horizontal plane and having a length along said main length direction, the first plate integrating a first upper portion of duct (9), open downwards and extending substantially along said direction,
- a second plate (3, 150b) extending substantially in an horizontal plane and having a length along the main direction, the second plate integrating a second lower portion (19) of duct, open upwards, and extending substantially along the main direction,
- the first and second plates being connected together for defining said air duct (9,124).

4. The cockpit according to anyone of claims 2 or 3, wherein the antivibration structure includes a plate (114) extending substantially in an horizontal plane and having a length along the main direction of the cockpit, the plate being disposed under the structural member (150) and fixed to it and to a substantially vertical leg (116, 118) which is connected to the plate, at some distance from the lateral sides of the cockpit (158a, 158b).

5. The cockpit according to anyone of preceding claims, wherein the antivibration structure includes:
- one of a plate or a bar (55a, 114) extending substantially in the main direction (11, 151) of the cockpit, in a lower area of the cockpit and to which is connected one of the steering column and the gear lever for transmitting vibrations,
- and at least one stem (55b, 55c; 116,118) standing under the plate or the bar (55a, 114), said at least one stem being connected to connection means (144) for connecting the stem to the floor of the vehicle, in order to transmit said vibrations towards the floor.

6. The cockpit according to anyone of preceding claims, wherein the antivibration structure (5,110) extends from the lateral side of the cockpit (9a, 158a) which is the nearest to the steering column (51) to beyond the location area of said steering column, but only on a portion of the length of the cockpit.

7. The cockpit according to anyone of preceding claims, which is connected, through the antivibration structure (5, 110), to a heating and ventilating unit (17, 112) extending under the antivibration structure and being adapted for generating air at a regulated temperature to the input means for air connected to said air duct (9,124).

8. The cockpit according to claim 7, wherein the cockpit further comprises sliding means (101) for slidably connecting the heating and ventilating unit (17) to the cockpit.

9. An automotive vehicle having a running longitudinal direction and comprising:
- a structural body (134) including "*A*"pillars (87a, 87b),
- a cockpit (200) having a main length direction (11,151) and a length (L₁) along said main direction, the main direction extending substantially perpendicular to the longitudinal direction (X) of the vehicle and crossing two lateral sides (9a, 9b; 158a, 158b) of the cockpit which are adapted to be located near the "A" pillars of the vehicle, the cockpit being adapted to withstand, in determined conditions, a determined maximum force, the cockpit comprising:
- fixation means (156, 142, 144 ; 63a, 63b) for fixing the cockpit to the structural body of the vehicle and for transfering from one to the other, at least a part of said determined maximum force, and
- transversal reinforcing means (1, 3, 124) extending substantially along said main length direction, wherein the transversal reinforcing means comprise one hollow cross beam (9,19 ; 124) which extends substantially along the main direction (11, 151) on at least a main portion of said length (L₁) and which defines an air duct and so is connected to input means (15 ; 128a, 128b) for air and to output means (13; 154b, 154c) for air to the vehicle,
- the vehicle being designed for withstanding a determined front shock (F₁) punched along substantially the longitudinal direction (X) of the vehicle and which is transmitted to the cockpit through the structural body (158) of said vehicle (10), said maximum force to be withstood by the cockpit being less than substantially 50 % of the force induced by the front shock (F₁), the remaining part of said force being essentially withstood by the structural body (134) of the vehicle,
the vehicle being **characterized in that** it comprises an antivibration structure (5, 110) which is connected to the cross beam (9, 124) and which comprises a bracket or portal (116) to which is connected one of a steering column (51) and a gear lever (132), for absorbing vibrations transmitted in said one of the steering column and the gear lever, the antivibration structure comprising at least two fixation areas (140, 142) located apart from each other for defining two connections with the structural body (134) of the vehicle.

10. The vehicle according to claim 9, **characterized in that**:
- the cross beam which defines air duct, the input means for air and the output means for air are integrated to a moulded structural member (1,3 ;150) which is essentially made of plastic material, is substantially plate-shaped, and is provided with at least some of said fixation means (63a, 63b ; 156), the stuctural member being covered with a decorative covering (65; 158) connected to it and which is less shockproof than the stuctural member (1, 3 ; 150), and
- the fixation means (63a, 63b ; 140, 142, 144, 156) of the cockpit are transmitting said maximum force to be withstood by the cockpit in such a way that substantially all this force is transmitted to the cross beam (1, 3; 124), said cross beam continuously extending on the whole length (L₁) of the cockpit and having a mechanical resistance sufficient for withstanding said maximum force, without breaking.
